# EUROPEAN PATENT APPLICATION

(11) **EP 2 840 114 A1**
(43) Date of publication of application: **25.02.2015**
(21) Application number: 14179756.3
(22) Date of filing: 04.08.2014
(51) Int. Cl.: C08L 23/08, C08L 33/08

(54) **Acrylic Rubber Composition and Sealing Device including the same**

(30) Priority: 05.08.2013 JP 2013162679
(71) Applicant: JTEKT CORPORATION, Osaka-shi Osaka 542-8502 (JP)
(72) Inventor: TSUDA, Takeshi, Osaka-shi, Osaka, 542-8502 (JP)
(74) Representative: Winter, Brandl, Fürniss, Hübner, Röss, Kaiser, Polte - Partnerschaft mbB

(57) **Abstract**

A sheet contains AEM and ACM, and the AEM and the ACM are integrally bonded together. A backbone monomer of the AEM is formed of ethylene methyl acrylate, and a crosslinking monomer of the AEM has a carboxyl group. A backbone monomer of the ACM is formed of at least one of ethyl acrylate, butyl acrylate, and methoxy ethyl acrylate, and a crosslinking monomer of the ACM has a carboxyl group, an epoxy group, or an active chlorine group.

## Description

### BACKGROUND OF THE INVENTION

### 1. Field of the Invention

The invention relates to an acrylic rubber composition and a sealing device including the acrylic rubber composition.

### 2. Description of the Related Art

Japanese Patent Application Publication No. 2010-90351 (JP 2010-90351 A) describes a conventional acrylic rubber composition. The acrylic rubber composition contains an ACM polymer having a carboxyl group as a crosslinking monomer or an AEM polymer having a carboxyl group as a crosslinking monomer.

The acrylic rubber composition contains a backbone monomer and a crosslinking monomer. The material properties of the acrylic rubber composition may be varied by changing the kinds and combinations of a backbone monomer and a crosslinking monomer. Note that, a material that satisfies all the requirements for, for example, an oil seal, such as heat resistance, oil resistance, and compression set resistance is not known. Therefore, for example, an attempt to blend a polymer such as fluororubber, which is different from acrylic rubber, with acrylic rubber has been made to impart heat resistance to the acrylic rubber.

However, the acrylic rubber and a polymer such as fluororubber, which is different from the acrylic rubber, are different in kind of an additive and molding conditions for a crosslinking reaction. Thus, a method for preparing a good product is not currently known.

When two or more kinds of polymers are blended to prepare an acrylic rubber composition, the acrylic rubber composition is likely to be strongly affected by disadvantageous properties of any one of the blended polymers. However, a method of effectively creating synergy is not currently known.

### SUMMARY OF THE INVENTION

One object of the invention is to provide an acrylic rubber composition with improved heat resistance, oil resistance and compression set resistance, and to provide a sealing device including the acrylic rubber composition.

An aspect of the invention relates to an acrylic rubber composition including: a first polymer containing a backbone monomer formed of ethylene methyl acrylate, and a crosslinking monomer having a carboxyl group; and a second polymer containing a backbone monomer formed of at least one of ethyl acrylate, butyl acrylate, and methoxy ethyl acrylate, and a crosslinking monomer having a carboxyl group, an epoxy group, or an active chlorine group. The first polymer and the second polymer are integrally bonded together.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating an acrylic rubber composition according to an embodiment of the invention;
FIG. 2 is a view illustrating the chemical structure of AEM of the acrylic rubber composition;
FIG. 3 is a view illustrating the chemical structure of ACM of the acrylic rubber composition;
FIG. 4 is a view illustrating the chemical structure of a backbone monomer of the ACM;
FIG. 5 is a view illustrating the chemical structures of three kinds of backbone monomers of the ACM;
FIG. 6A is a view illustrating a process of manufacturing the acrylic rubber composition;
FIG. 6B is a view illustrating a process of manufacturing the acrylic rubber composition; and
FIG. 7 is a schematic sectional view illustrating a sealing device including the acrylic rubber composition and its surroundings.

### DETAILED DESCRIPTION OF EMBODIMENTS

Hereinafter, example embodiments of the invention will be described in detail with reference to the accompanying drawings.

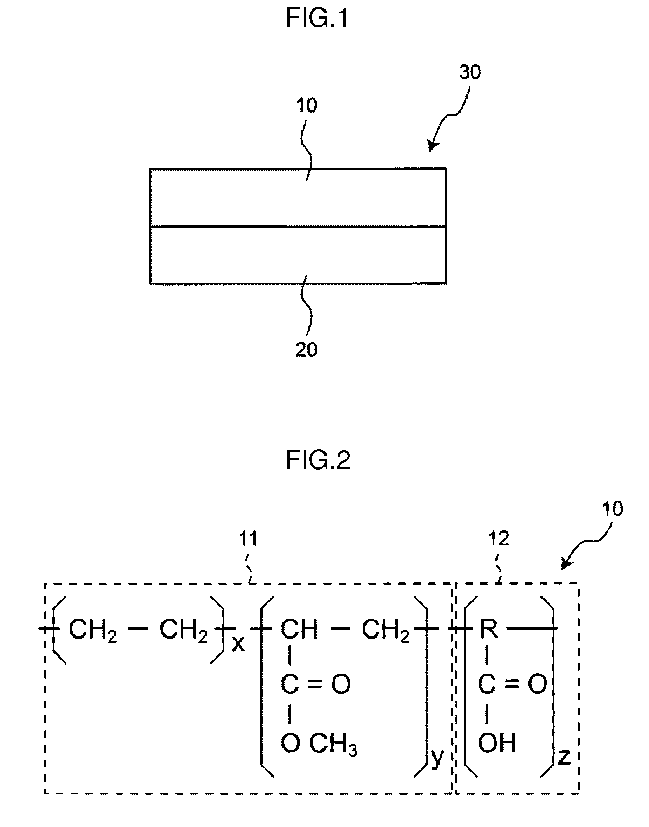

FIG. 1 is a schematic diagram illustrating an acrylic rubber composition according to an embodiment of the invention.

In the acrylic rubber composition, ethylene acrylate rubber (AEM) 10, which is an example of a first polymer, and acrylic rubber (ACM) 20, which is an example of a second polymer, are integrally bonded together. The AEM 10 and the ACM 20 constitute a sheet 30 which is in the form of a flat plate.

FIG. 2 illustrates the chemical structure of the AEM 10.

As illustrated in FIG. 2, the AEM 10 contains a backbone monomer 11 and a crosslinking monomer 12. The backbone monomer 11 is formed of ethylene methyl acrylate (EMA) containing ethylene and methyl acrylate. The crosslinking monomer 12 has a carboxyl group.

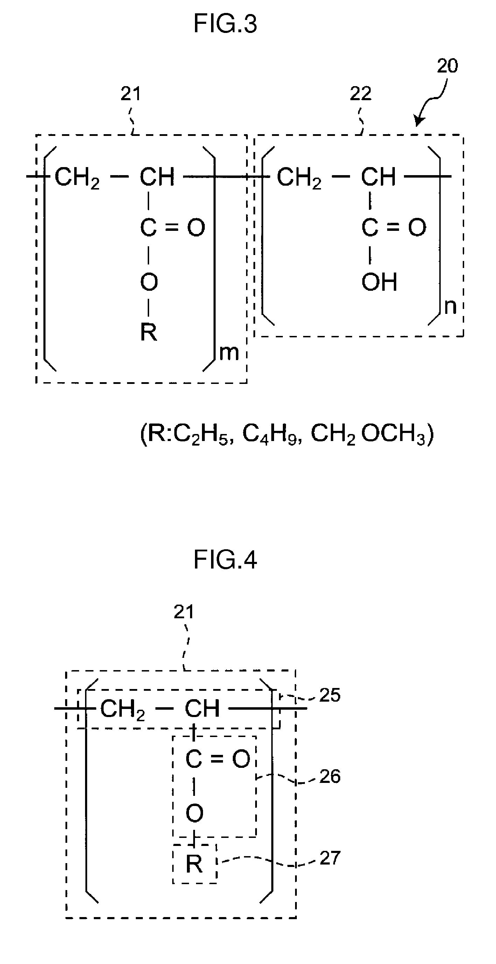

FIG. 3 illustrates the chemical structure of the ACM 20.

As illustrated in FIG. 3, the ACM 20 contains a backbone monomer 21 and a crosslinking monomer 22. The backbone monomer 21 is formed of at least one of ethyl acrylate (EA), butyl acrylate (BA), and methoxy ethyl acrylate (MEA). The crosslinking monomer 22 has a carboxyl group. The crosslinking monomer 22 may have an epoxy group or an active chlorine group instead of the carboxyl group.

Examples of each of the crosslinking monomers 12, 22 having a carboxyl group include acrylic acid, methacrylic acid, crotonic acid, 2-pentenoic acid, maleic acid, fumaric acid, itaconic acid, maleic acid monoalkyl ester, fumaric acid monoalkyl ester, and itaconic acid monoalkyl ester.

Examples of the crosslinking monomer 22 having an epoxy group include glycidyl acrylate, glycidyl methacrylate, allyl glycidyl ether, and methallyl glycidyl ether.

Examples of the crosslinking monomer 22 having an active chlorine group include 2-chloroethyl vinyl ether, 2-chloroethyl acrylate, vinylbenzyl chloride, vinyl chloroacetate, and allyl chloroacetate.

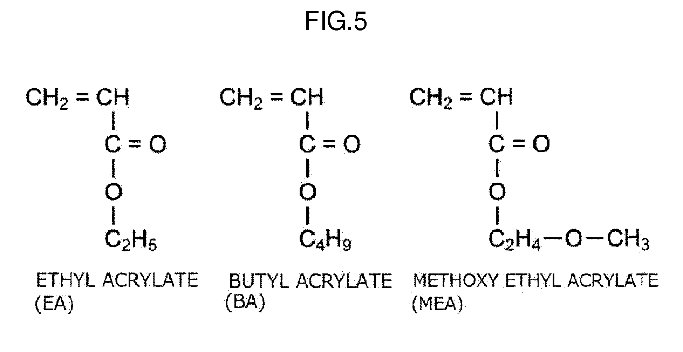

FIG. 4 illustrates the chemical structure of the backbone monomer 21 of the ACM 20. FIG. 5 illustrates the chemical structures of ethyl acrylate (EA), butyl acrylate (BA), and methoxy ethyl acrylate (MEA) of the backbone monomer 21 of the ACM 20.

As illustrated in FIG. 4, the backbone monomer 21 contains a main chain 25, a side-chain ester structure (polar side chain) 26, and a side-chain alkyl group 27. The main chain 25 is related to heat resistance. The side-chain ester structure 26 and the side-chain alkyl group 27 are related to oil resistance, low-temperature resistance, and heat resistance.

The backbone monomer 21 of the ACM 20 is formed of at least one of EA, BA, and MEA. Basic property of the ACM 20 is determined based on EA, BA, MEA, and the combination thereof.

Table 1 indicates environment resistance, more specifically, low-temperature resistance, oil resistance, and heat resistance of backbone monomers of commonly-used AEM and ACM. Table 2 indicates properties, more specifically, heat resistance, compression set resistance, and processability of crosslinking monomers of commonly-used AEM and ACM.

In Tables 1, 2, "A" indicates that the property is excellent, "B" indicates that the property is good, "C" indicates that the property is slightly poor, and "D" indicates that the property is poor.

**Table 1**

| Polymer | Kind of Backbone Monomer | Environment Resistance | | |
|---|---|---|---|---|
| | | Low-temperature resistance | Oil Resistance | Heat Resistance |
| ACM | Ethyl Acrylate (EA) | D | B | B |
| | Butyl Acrylate (BA) | A | D | C |
| | Methoxy Ethyl Acrylate (MEA) | B | A | D |
| AEM | Ethylene Methyl Acrylate (EMA) | C | C | A |

**Table 2**

| Polymer | Kind of Crosslinking Monomer | Heat Resistance | Compression Set Resistance | Processability |
|---|---|---|---|---|
| ACM | Epoxy-Based | D | C | B |
| | Active Chlorine-Based | C | D | C |
| | Carboxyl-Based | A | A | C |
| AEM | Carboxyl-Based | A | B | C |
| | Peroxide-Crosslinked | B | B | A |

As indicated in Tables 1, 2, the properties vary greatly depending on the kinds of the backbone monomer and the crosslinking monomer.

For example, as indicated in Table 1, the oil resistance of the ACM containing BA is poor, but the oil resistance of the ACM containing MEA is excellent.

As indicated in Table 2, the heat resistance and the compression set resistance of the ACM containing the carboxyl-based crosslinking monomer are excellent. The heat resistance of the AEM containing the carboxyl-based crosslinking monomer is excellent.

Next, a method of preparing the sheet 30 will be described.

The AEM 10 is prepared by copolymerizing the backbone monomer 11 and the crosslinking monomer 12 according to a known method such as emulsion polymerization, suspension polymerization, solution polymerization, or bulk polymerization. In addition, the ACM 20 is prepared by copolymerizing the backbone monomer 21 and the crosslinking monomer 22 according to a known method such as emulsion polymerization, suspension polymerization, solution polymerization, or bulk polymerization. In this case, when the weight percent of the entirety of each of the backbone monomers 11, 21 is expressed by 100 wt%, the weight percent of each of the crosslinking monomers 12, 22 is 1 wt% to 5 wt%.

A reinforcing material such as carbon black or silica and a solid lubricant such as graphite, PTFE, or molybdenum disulfide are added to the AEM 10 and the ACM 20, depending on required properties. In this case, a single kind or two or more kinds of reinforcing material, and a single kind or two or more kinds of solid lubricant are added to the AEM 10 and the ACM 20 depending on the required properties.

The reinforcing material is added to the AEM 10 and the ACM 20 in order mainly to improve the reinforcing property. When the weight percent of the entirety of each of the AEM 10 and the ACM 20 is expressed by 100 wt%, the weight percent of the added reinforcing material is preferably 60 wt% to 80 wt%. This is because, it is not preferable that the weight percent of the added reinforcing material be less than 60 wt% because the reinforcing effect is low, and it is also not preferable that the weight percent of the added reinforcing material be more than 80 wt% because the flexibility of each of the AEM 10 and the ACM 20 is decreased and thus each of the AEM 10 and the ACM 20 becomes hard and brittle.

The solid lubricant is added to the AEM 10 and the ACM 20 in order mainly to improve wear resistance. When the weight percent of the entirety of each of the AEM 10 and the ACM 20 is expressed by 100 wt%, the weight percent of the added solid lubricant is preferably 10 wt% to 20 wt%. This is because, it is not preferable that the weight percent of the added solid lubricant be less than 10 wt% because the lubricating effect is low, and it is also not preferable that the weight percent of the added solid lubricant be more than 20 wt% because each of the AEM 10 and the ACM 20 becomes hard and brittle.

In addition to the above-described additives, for example, the following materials are optionally added to the ACM 20 as needed: acetylene black, attapulgite, alumina, kaolin clay, glass fiber, glass beads, glass flake, calcium silicate (wollastonite), calcium silicate (xonotlite), calcium silicate (synthetic, amorphous), zirconium silicate, zinc oxide whisker, zeolite, sepiolite, selenite, talc, magnesium carbonate, potassium titanate, barium titanate, feldspar powder, hydrotalcite, pyrophyllite (agalmatolite clay), furnace black, bentonite, aluminum borate, mica (phlogopite), mica (muscovite), magnesium sulfate (MOS-HIGE), calcium sulfite, basic magnesium carbonate, silica stone powder, diatomaceous earth, synthetic silica (dry), synthetic silica (wet), graphite powder, antimony trioxide, zirconium oxide, titanium oxide (anatase), titanium oxide (rutile), magnesium oxide, zinc oxide (dry), zinc oxide (wet), iron oxide, aluminum hydroxide, magnesium hydroxide, silicon carbide, calcium carbonate (colloid), calcium carbonate (chalk), calcium carbonate (heavy), calcium carbonate (light), barium carbonate, carbon fiber, silicon nitride, calcium sulfate (anhydrous), barium sulfate (barite), and barium sulfate (sedimentary).

The kind and the addition amount of each of the reinforcing material, the solid lubricant, and the like that are added to the AEM 10 and the ACM 20 may vary depending on required properties.

The AEM 10 and the ACM 20 are separately kneaded. Specifically, each of the AEM 10 and the ACM 20 is kneaded with the use of a kneader such as Intermix, a pressure kneader, or a closed Banbury mixer, or an open roll, or the like.

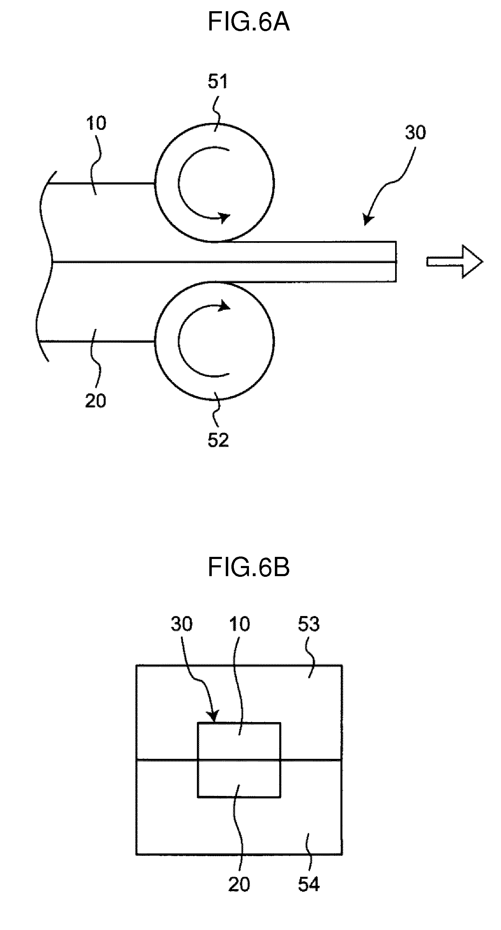

FIG. 6A and FIG. 6B are views each illustrating a process of manufacturing the sheet 30.

As illustrated in FIG. 6A, the AEM 10 and the ACM 20, which have been separately kneaded, are combined together, and the combined AEM 10 and ACM 20 are rolled by passing between rollers 51, 52. As a result, the sheet 30 in which the AEM 10 and the ACM 20 are fitted together under pressure is prepared.

Next, as illustrated in FIG. 6B, the sheet 30 is placed inside dies 53, 54 and is heated to 170°C to 180°C while being pressed such that the AEM 10 and the ACM 20 are fixed to each other. As a result, the AEM 10 and the ACM 20 are integrally bonded together, and the sheet 30 formed of an acrylic rubber composition is manufactured.

Table 3 illustrates a composition and evaluation results of properties regarding each of Examples 1 to 8 that vary in the kinds and combination of the backbone monomer 21 and the crosslinking monomer 22 of the ACM 20 of the sheet 30.

In the sheet 30 in each of Examples 1 to 8, the backbone monomer 11 of the AEM 10 is formed of EMA, and the crosslinking monomer 12 has a carboxyl group. When the weight percent of the entirety of the sheet 30 is expressed by 100 wt%, the weight percent of each of the AEM 10 and the ACM 20 is 40 wt% to 60 wt%, and is preferably substantially 50 wt%.

In Table 3, "A" indicates that the property is excellent, "B" indicates that the property is good, and "C" indicates that the property is slightly poor. In Table 3, "S" indicates that the substance is contained, and "-" indicates that the substance is not contained.

**Table 3**

| Polymer | Backbone Monomer | | | | Crosslinking Monomer | | | | Heat Resistance | Oil Resistance | Compression Set Resistance |
|---|---|---|---|---|---|---|---|---|---|---|---|
| | AEM | ACM | | | AEM | ACM | | | AEM | ACM | |
| | EMA | EA | BA | MEA | Carboxyl-Based | Carboxyl-Based | Epoxy-Based | Active Chlorine-Based | | | |
| Example 1 | S | S | - | - | S | S | - | - | A | A | A |
| Example 2 | S | S | S | - | S | S | - | - | A | A | A |
| Example 3 | S | S | S | S | S | S | - | - | A | A | A |
| Example 4 | S | - | S | S | S | S | - | - | A | A | A |
| Example 5 | S | S | - | - | S | - | S | - | A | B | A |
| Example 6 | S | S | S | S | S | - | S | - | A | B | A |
| Example 7 | S | S | - | - | S | - | - | S | A | C | A |
| Example 8 | S | S | S | S | S | - | - | S | A | C | A |

In the sheet 30 in Example 1, the backbone monomer 21 of the ACM 20 is EA. The crosslinking monomer 22 of the ACM 20 has a carboxyl group.

In the sheet 30 in Example 1, the heat resistance of the AEM 10 and the oil resistance and the compression set resistance of the ACM 20 are excellent.

In the sheet 30 in Example 2, the backbone monomer 21 of the ACM 20 is a mixture of EA and BA. When the weight percent of the entirety of the backbone monomer 21 is expressed by 100 wt%, the weight percent of each of EA and BA is 40 wt% to 60 wt%, and is preferably substantially 50 wt%. The crosslinking monomer 22 of the ACM 20 has a carboxyl group.

In the sheet 30 in Example 2, the heat resistance of the AEM 10 and the oil resistance and the compression set resistance of the ACM 20 are excellent.

In the sheet 30 in Example 3, the backbone monomer 21 of the ACM 20 is a mixture of EA, BA, and MEA. When the weight percent of the entirety of the backbone monomer 21 is expressed by 100 wt%, the weight percent of each of EA, BA, and MEA is 20 wt% to 40 wt%, and is preferably approximately 33 wt%. The crosslinking monomer 22 of the ACM 20 has a carboxyl group.

In the sheet 30 in Example 3, the heat resistance of the AEM 10 and the oil resistance and the compression set resistance of the ACM 20 are excellent.

In the sheet 30 in Example 4, the backbone monomer 21 of the ACM 20 is a mixture of BA and MEA. When the weight percent of the entirety of the backbone monomer 21 is expressed by 100 wt%, the weight percent of each of BA and MEA is 40 wt% to 60 wt%, and is preferably approximately 50 wt%. The crosslinking monomer 22 of the ACM 20 has a carboxyl group.

In the sheet 30 in Example 4, the heat resistance of the AEM 10 and the oil resistance and the compression set resistance of the ACM 20 are excellent.

In the sheet 30 in Example 5, the backbone monomer 21 of the ACM 20 is EA. The crosslinking monomer 22 of the ACM 20 has an epoxy group.

In the sheet 30 in Example 5, the heat resistance of the AEM 10 and the compression set resistance of the ACM 20 are excellent, and the oil resistance of the ACM 20 is good.

In the sheet 30 in Example 6, the backbone monomer 21 of the ACM 20 is a mixture of EA, BA, and MEA. When the weight percent of the entirety of the backbone monomer 21 is expressed by 100 wt%, the weight percent of each of EA, BA, and MEA is 20 wt% to 40 wt%, and is preferably about 33 wt%. The crosslinking monomer 22 of the ACM 20 has an epoxy group.

In the sheet 30 in Example 6, the heat resistance of the AEM 10 and the compression set resistance of the ACM 20 are excellent, and the oil resistance of the ACM 20 is good.

In the sheet 30 in Example 7, the backbone monomer 21 of the ACM 20 is EA. The crosslinking monomer 22 of the ACM 20 has an active chlorine group.

In the sheet 30 in Example 7, the heat resistance of the AEM 10 and the compression set resistance of the ACM 20 are excellent, and the oil resistance of the ACM 20 is slightly poor.

In the sheet 30 in Example 8, the backbone monomer 21 of the ACM 20 is a mixture of EA, BA, and MEA. When the weight percent of the entirety of the backbone monomer 21 is expressed by 100 wt%, the weight percent of each of EA, BA, and MEA is 20 wt% to 40 wt%, and is preferably about 33 wt%. The crosslinking monomer 22 of the ACM 20 has an active chlorine group.

In the sheet 30 in Example 8, the heat resistance of the AEM 10 and the compression set resistance of the ACM 20 are excellent, and the oil resistance of the ACM 20 is slightly poor.

In the sheet 30 in the above-described embodiment, the backbone monomer 11 of the AEM 10 is formed of EMA, and the crosslinking monomer 12 of the AEM 10 has a carboxyl group. In addition, the backbone monomer 21 of the ACM 20 is formed of at least one of EA, BA, and MEA. The crosslinking monomer 22 of the ACM 20 has a carboxyl group, an epoxy group, or an active chlorine group. Therefore, the heat resistance is improved by the AEM 10, and the oil resistance and compression set resistance are improved by the ACM 20. Thus, the heat resistance, the oil resistance, and the compression set resistance of the sheet 30 as a whole are improved.

In the sheet 30 in the above-described embodiment, the backbone monomer 21 of the ACM 20 is EA, a mixture of BA and EA, a mixture of BA, EA, and MEA, or a mixture of BA and MEA. In addition, the crosslinking monomer 22 of the ACM 20 has a carboxyl group. Thus, especially, the oil resistance of the ACM 20 is further improved.

In the sheet 30 in the above-described embodiment, each of the crosslinking monomers 12, 22 of the AEM 10 and the ACM 20 has a carboxyl group. Therefore, it is possible to use the same crosslinking agent and the same crosslinking accelerator for the AEM 10 and the ACM 20. Thus, it is possible to subject the AEM 10 and the ACM 20 to primarily vulcanization under the same molding conditions. As a result, the cycle time (process time) is reduced, and adverse effects caused by a change in the crosslinking agent are reduced. Further, the storage stability of the sheet 30 is improved, and the sheet 30 may be prepared in advance.

In the sheet 30 in the above-described embodiment, when the weight percent of the entirety of the backbone monomer 21 of the ACM 20 is expressed by 100 wt%, the weight percent of each of BA and EA is 40 wt% to 60 wt% or each of BA and MEA is 40 wt% to 60 wt%. Thus, the influence of the disadvantageous properties of BA or EA is reduced, and synergy between BA and EA is effectively produced. In addition, the influence of the disadvantageous properties of BA or MEA is reduced, and synergy between BA and MEA is effectively produced.

In the sheet 30 in the above-described embodiment, when the weight percent of the entirety of the backbone monomer 21 of the ACM 20 is expressed by 100 wt%, the weight percent of each of BA, EA, and MEA is 20 wt% to 40 wt%. Thus, the influence of the disadvantageous properties of BA, EA, or MEA is reduced, and synergy among BA, EA, and MEA is effectively produced.

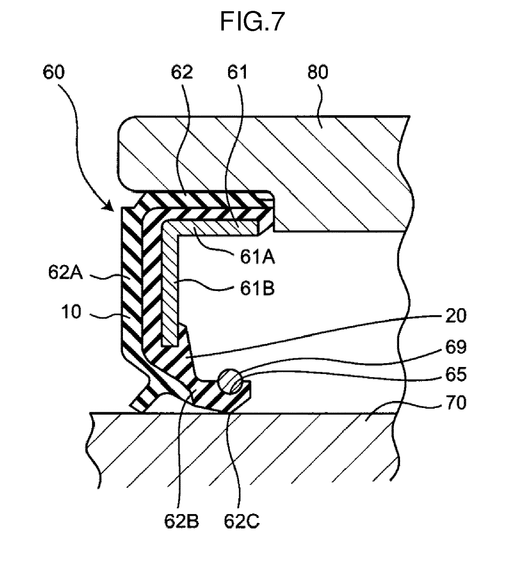

FIG. 7 is a schematic sectional view illustrating a sealing device 60 including the sheet 30 and its surroundings.

As illustrated in FIG. 7, the sealing device 60 is disposed near one axial end-side opening between a shaft member 70, which may function as a sliding member, and a housing 80. The sealing device 60 seals the one axial end-side opening between the shaft member 70 and the housing 80. A space defined by the shaft member 70, the housing 80, and the sealing device 60 is filled with, for example, lubricating oil.

The sealing device 60 includes an annular core member 61 and an elastic member 62.

The core member 61 has a generally L-shaped section. The core member 61 has a tubular portion 61A and a radially-extending portion 61B. The tubular portion 61A extends generally along the axial direction. The tubular portion 61A is fixedly fitted to an inner peripheral face of the housing 80. The radially-extending portion 61B extends from one end of an inner peripheral face of the tubular portion 61A inward in the radial direction.

The elastic member 62 has a base portion 62A and a lip portion 62B. The base portion 62A is fixed to the core member 61 so as to cover an outer peripheral face of the tubular portion 61A, an axially outer end face of the radially-extending portion 61B, a part of an axially inner end face of the radially-extending portion 61B, and a radially inner end face of the radially-extending portion 61 B. The elastic member 62 is an annular single-piece member made of the sheet 30. The ACM 20 of the sheet 30 is located on the sealing side, that is, the inner side in the axial direction. The inner side of the sheet 30 includes a protrusion 62C. On the other hand, the AEM 10 of the sheet 30 is located on the opposite side of the sheet 30 from the sealing side, that is, the outer side in the axial direction.

The lip portion 62B has a generally tubular shape and protrudes in the axial direction from a radially inner end of the base portion 62A. An inner peripheral face of the lip portion 62B has an annular protrusion 62C that protrudes inward in the radial direction. The protrusion 62C is configured to slide on the shaft member 70. An outer peripheral face of the lip portion 62B has a spring fitting groove 65 formed at a portion overlapping with the protrusion 62C in the radial direction. A spring 69 is fitted into the spring fitting groove 65. The spring 69 presses the protrusion 62C toward the shaft member 70, thereby improving the sealing property of the sealing device 60.

In the sealing device 60 of the above-described embodiment, the ACM 20 of the sheet 30 is located on the sealing side, and the AEM 10 of the sheet 30 is located on the opposite side of the sheet 30 from the sealing side. Therefore, the oil resistance and compression set resistance, which are required for the sealing side where lubricating oil is sealed, are improved by the ACM 20. On the other hand, the heat resistance, which is required for the opposite side of the sheet 30 from the sealing side, is improved by the AEM 10. Thus, the heat resistance, the oil resistance, and the compression set resistance of the sealing device 60 as a whole are improved.

In the above-described embodiment, the backbone monomer 21 of the ACM 20 is EA, a mixture of EA and BA, a mixture of EA, BA, and MEA, or a mixture of BA and MEA. However, the invention is not limited to this configuration. For example, the backbone monomer of the ACM may be a mixture of EA and MEA.

In the above-described embodiment, when the weight percent of the entirety of the sheet 30 is expressed by 100 wt%, the weight percent of each of the AEM 10 and the ACM 20 is 40 wt% to 60 wt%. However, the invention is not limited to this configuration. For example, when the weight percent of the entirety of the sheet is expressed by 100 wt%, the weight percent of each of the AEM and the ACM may be 30 wt% to 70 wt%. In this case as well, synergy between the AEM and the ACM is effectively produced.

In the above-described embodiment, when the weight percent of the entirety of the backbone monomer 21 of the ACM 20 is expressed by 100 wt%, the weight percent of each of BA and EA is 40 wt% to 60 wt% or the weight percent of each of BA and MEA is 40 wt% to 60 wt%. However, the invention is not limited to this configuration. For example, when the weight percent of the entirety of the backbone monomer of the ACM is expressed by 100 wt%, the weight percent of each of BA and EA may be 30 wt% to 70 wt% or the weight percent of each of BA and MEA may be 30 wt% to 70 wt%. In this case as well, synergy between BA and EA or synergy between BA and MEA is effectively produced.

In the above-described embodiment, when the weight percent of the entirety of the backbone monomer 21 of the ACM 20 is expressed by 100 wt%, the weight percent of each of EA, BA, and MEA is 20 wt% to 40 wt%. However, the invention is not limited to this configuration. For example, when the weight percent of the entirety of the backbone monomer of the ACM is expressed by 100 wt%, the weight percent of each of BA, EA, and MEA may be 10 wt% to 50 wt%. In this case as well, synergy among BA, EA, and MEA is effectively produced.

In the above-described embodiment, the sealing device 60 is disposed between the shaft member 70 and the housing 80. However, the sealing device according to the invention may be used in a member, such as a rolling bearing or a transmission, which is disposed in a usage environment of 170°C or lower and is required to have sufficient heat resistance, oil resistance, compression set resistance, and wear resistance.

In addition, in the above-described embodiment, the core member 61 of the sealing device 60 is fixed to the housing 80. However, in the invention, the core member may be fixed to the outer peripheral face of the shaft member. The sealing device may be attached to a rolling bearing and the core member may be fixed to an outer ring, an inner ring, or an intermediate ring of the rolling bearing.

In addition, in the above-described embodiment, the core member 61 of the sealing device 60 has the tubular portion 61A and the radially-extending portion 61B. However, in the invention, the core member need not have the tubular portion.

In the above-described embodiment, the sealing device 60 includes the spring 69. However, in the invention, the sealing device need not include the spring or a sealing device in another form may be provided.

In the acrylic rubber composition and the sealing device according to the invention, the first polymer and the second polymer are integrally bonded together. Therefore, the heat resistance, oil resistance, and compression set resistance are improved by the first polymer and the second polymer.

## Claims

1. An acrylic rubber composition comprising:
a first polymer containing a backbone monomer formed of ethylene methyl acrylate, and a crosslinking monomer having a carboxyl group; and
a second polymer containing a backbone monomer formed of at least one of ethyl acrylate, butyl acrylate, and methoxy ethyl acrylate, and a crosslinking monomer having a carboxyl group, an epoxy group, or an active chlorine group,
the first polymer and the second polymer being integrally bonded together.

2. The acrylic rubber composition according to claim 1, wherein:
the backbone monomer of the second polymer is ethyl acrylate, a mixture of butyl acrylate and ethyl acrylate, a mixture of butyl acrylate, ethyl acrylate, and methoxy ethyl acrylate, or a mixture of butyl acrylate and methoxy ethyl acrylate; and
the crosslinking monomer of the second polymer has the carboxyl group.

3. The acrylic rubber composition according to claim 2, wherein:
the backbone monomer of the second polymer is a mixture of butyl acrylate and ethyl acrylate or a mixture of butyl acrylate and methoxy ethyl acrylate; and
when a weight percent of an entirety of the backbone monomer of the second polymer is expressed by 100 wt%, a weight percent of each of butyl acrylate and ethyl acrylate is 40 wt% to 60 wt% or a weight percent of each of butyl acrylate and methoxy ethyl acrylate is 40 wt% to 60 wt%.

4. The acrylic rubber composition according to claim 2, wherein:
the backbone monomer of the second polymer is a mixture of butyl acrylate, ethyl acrylate, and methoxy ethyl acrylate; and
when a weight percent of an entirety of the backbone monomer of the second polymer is expressed by 100 wt%, a weight percent of each of butyl acrylate, ethyl acrylate, and methoxy ethyl acrylate is 20 wt% to 40 wt%.

5. A sealing device comprising:
a core member; and
an elastic member fixedly fitted to the core member, wherein
the elastic member has
a base portion fixed to the core member and
a lip portion that extends from the base portion and slides on a sliding member, and
the elastic member is formed of the acrylic rubber composition according to any one of claims 1 to 4, and
the second polymer of the acrylic rubber composition is located on a sealing side, and the first polymer is located on an opposite side of the elastic member from the sealing side.
